# EUROPÄISCHE PATENTSCHRIFT

(11) **EP 2 713 259 B1**
(45) Veröffentlichungstag und Bekanntmachung des Hinweises auf die Patenterteilung: **15.09.2021**
(21) Anmeldenummer: 12186350.0
(22) Anmeldetag: 27.09.2012
(51) Int. Cl.: G06F 3/0488, G06F 3/041

(54) **Verfahren zur Verbesserung der Genauigkeit von Touch-Eingaben auf Touch-Bildschirmen und Produkte mit Touchscreens**
Method for improving the precision of touch inputs on touch screens and products with touch screens
Procédé d'amélioration de la précision de la saisie tactile sur écrans tactiles et produits avec écrans tactiles

(43) Veröffentlichungstag der Anmeldung: 02.04.2014
(73) Patentinhaber: Wincor Nixdorf International GmbH, 33106 Paderborn (DE)
(72) Erfinder: Jungclaus, Kai, 33102 Paderborn (DE)

(56) Entgegenhaltungen:
- WO-A1-2009/063781
- WO-A1-2009/154638
- WO-A2-2009/012332
- DE-A1- 4 406 668
- GB-A- 2 348 520
- GB-A- 2 404 127
- US-A- 5 604 843
- US-A1- 2009 207 144
- US-A1- 2009 225 037

## Beschreibung

Die Erfindung betrifft ein Verfahren und eine Vorrichtung zur Verbesserung der Genauigkeit von Touch-Eingaben auf einem Touch-Bildschirm, der mit einem Computer verbunden ist, auf dem ein Betriebssystem läuft, das über Steuerelemente, die auf dem Touch-Bildschirm dargestellt werden steuerbar ist, wobei durch Berühren des Touch-Bildschirms Signale mit Berührungskoordinaten an das Betriebssystem übertragbar sind, um durch das Betriebssystem zu überprüfen, ob der Bildschirm im Bereich der Steuerelemente berührt wurde, um entsprechend eine Funktion auszulösen.

### Gebiet der Erfindung:

Ein Touchscreen, Tastschirm, Berührungsbildschirm bzw. Sensorbildschirm ist ein kombiniertes Ein- und Ausgabegerät, bei dem durch Berührung von Teilen eines Bildes der Programmablauf eines technischen Gerätes, meist eines Computers, direkt gesteuert werden kann. Die technische Umsetzung der Befehlseingabe ist für den Nutzer gleichsam unsichtbar und erzeugt so den Eindruck einer unmittelbaren Steuerung eines Computers per Fingerzeig. Das Bild, welches durch das darauf oder darunter befindliche Touchpad berührungsempfindlich gemacht wird, kann auf verschiedene Weise erzeugt werden: dynamisch mittels Monitoren, über Projektion oder physikalisch (etwa als Ausdruck).

Statt einen Cursor per Maus oder Ähnliches zu steuern, kann der Finger oder ein Zeigestift verwendet werden. Die Anzeige eines Mauszeigers wird damit überflüssig.

Die Analogie zum Mausklick ist ein kurzes Tippen. Durch Ziehen des Fingers oder Stiftes über den Touchscreen kann eine "Ziehen und Fallenlassen"-Operation ausgeführt werden. Manche Systeme können mehrere gleichzeitige Berührungen zu Befehlen verarbeiten (Multi-Touch), um zum Beispiel angezeigte Elemente zu drehen oder zu skalieren.

Es gibt eine Reihe von Implementierungen von Touch-Screens. Hierzu gehören mehrere Funktionsprinzipien zur Umsetzung der Berührungsempfindlichkeit:
Resistive Systeme, kapazitive Systeme, induktive Systeme, SAW (Surface Acoustic Wave) - "(schall)wellen-gesteuerte Systeme", optische Systeme (in der Regel Infrarotlicht-Gitter vor dem Monitor), Dispersive-Signal-Technology-Systeme.

Es ist zu beachten, dass es grundsätzlich die Darstellungsebene mit dem Monitor bzw. Bildschirm und die Sensorebene, die die Berührung detektiert, gibt.

Touchbildschirme haben eine bestimmte Auflösung und Toleranz. Dadurch, wie auch durch den aktuellen Kalibrierungszustand, kommt es zu Abweichungen zwischen der Position, die ein Bediener auf einem Touchbildschirm berührt und der Position bei der vom System ein Touch tatsächlich ausgeführt wird.

Bei großen Tastenfeldern wie "1" in einer POS-Applikation ist dies meist unkritisch. Möchte man jedoch auf Systemebene z.B. ein Fenster durch anklicken des "X"-Symbols schließen, oder ein Programm in der Windows Startliste anwählen, kann dies den Bediener zur Verzweiflung bringen. Tatsächlich ist es sogar unmöglich bestimmte Punkte am Rand per Touch zu erreichen.

DE 44 06668A1 und GB 2 348 520 offenbaren Verfahren zur Steuerung der Eingabe auf Interaktiven Benutzerflächen. DE 44 06668A1 verfolgt einen statischen Ansatz bei dem die Interaktions-Buttons größer sind als optisch dargestellt. GB 2 348 520 steuert eine Maus auf den wahrscheinlich nächsten Interaktions-Button.

Die US2009225037A1 offenbart ein Verfahren bei dem über eine API auf Mausereignisse zugegriffen werden kann.

Grundsätzlich besitzen Computer bzw. ATM (Automated teller machine/Geldautomaten), POS (Point of Selling bzw. Kassensysteme), SB-Automaten (Selbstbedienungsautomaten) oder andere Eingabegerät, die über einen berührungsempfindlichen Bildschirm verfügen, eine Zentraleinheit bzw. Prozessor, auf dem ein Betriebssystem läuft. Das Betriebssystem umfasst in der Regel eine Reihe von Treibern, die zur Ansteuerung der Ausgabe- und der Eingabegeräte dienen. Die Eingabegeräte sind in der Regel Mäuse und Tastaturen. Bei der Verwendung von berührungsempfindlichen Bildschirmen, handelt es sich hierbei um ein Gerät, das sowohl eine Eingabeeinheit aufweist, die zum Beispiel eine Tastatur und/oder eine Maus ersetzt, und eine Ausgabeeinheit. Die Kommunikation mit diesen Geräten erfolgt in der Regel über Treiber, die in das Betriebssystem eingebettet sind. Die einzelnen Treiber arbeiten in der Regel unabhängig voneinander, so weist der Treiber für die Benutzereingabe nicht, welche Informationen auf dem Bildschirm dargestellt werden. Somit ist es Aufgabe des Betriebssystems die Benutzereingabe mit der Bildschirmdarstellung bei der Benutzung eines berührungsempfindlichen Bildschirms zusammenzuführen. Betriebssysteme wie Windows oder Linux geben hier den Entwicklern von Hardware nur sehr wenige Möglichkeiten für den Eingriff in diese Logik. Sie stellen zwar den Entwicklern die Möglichkeit zur Verfügung Treiber einzubetten, jedoch haben diese Treiber eine vorgegebene Funktionalität und lassen in der Regel einen Zugriff auf die Bildschirminhalte nicht zu.

### Überblick über die Erfindung:

Die Erfindung sorgt dafür, dass jeweils bei der Position der Touch ausgelöst wird, der vom Bediener angestrebt wurde.

Die Erfindung beruht darauf, dass erahnt wird, wo genau der Touch erfolgen sollte, und der Touch genau an dieser Stelle ausgelöst wird.

Hierzu wird der Bildschirminhalt um die erkannte Touchposition analysiert und ermittelt, um zu erkennen, wo der Touch mit größter Wahrscheinlichkeit ausgelöst werden sollte.

An dieser Position wird der Touch dann tatsächlich ausgelöst. Er wird quasi von der erkannten Position mit einem Gummiband an die richtige Position gezogen, was auch als "RibbonTouch" bezeichnet werden kann.

Die Analyse und Änderung der Touchkoordinaten kann grundsätzlich in einem Controller oder einer Softwareschicht erfolgen.

Bei aktuellen Betriebssystemen wie MS-Windows und Linux bietet es sich an, "RibbonTouch" als Dienst im Betriebssystem laufen zu lassen, da hier sowohl die Original-Touch-Koordinaten, wie auch der Bildschirminhalt in Form von Koordinaten der Kontrollelemente zur Verfügung steht.

Im Einzelnen handelt es sich bei der Erfindung um ein Verfahren zur Verbesserung der Genauigkeit von Touch-Eingaben auf einem Touch-Bildschirm, der mit einem Computer verbunden ist, auf dem ein Betriebssystem läuft, das über Steuerelemente, die auf dem Touch-Bildschirm dargestellt werden steuerbar ist, wobei durch Berühren des Touch-Bildschirms Signale mit Berührungskoordinaten an das Betriebssystem übertragbar sind, um durch das Betriebssystem zu überprüfen, ob der Bildschirm im Bereich der Steuerelemente berührt wurde, um entsprechend eine Funktion auszulösen. Die Erfindung ist gekennzeichnet durch die Schritte
- Abfangen der Signale mit den Berührungskoordinaten bevor diese an das Betriebssystem weitergegeben werden;
- Zugreifen auf die Koordinaten der Steuerelemente des Betriebssystems, und Überprüfen, ob die Berührungskoordinaten innerhalb eines Steuerelements liegen;
- falls die Berührungskoordinaten innerhalb eines Steuerelements liegen, Weiterleiten der Berührungskoordinaten an das Betriebssystem;
- falls die Berührungskoordinaten nicht innerhalb irgendeines der Steuerelemente liegen, Verändern der Berührungskoordinaten, so dass diese innerhalb des räumlich nächstliegenden Steuerelementes liegen, und Weiterleiten der veränderten Berührungskoordinaten an das Betriebssystem.

Bei der Veränderung der Berührungskoordinaten wird in einer möglichen Ausführungsform das räumlich nächstliegende Steuerungselement ausgewählt, in dem eine Abstandsberechnung durchgeführt wird. Die Abstandsberechnung erfolgt nach den bekannten Verfahren in einem zweidimensionalen oder mehrdimensionalen Raum. Zusätzlich können noch Aspekte der Gewichtung der Steuerungselemente in die Abstandsberechnung einfließen. Hierbei werden Elementen, die in der Regel häufiger ausgewählt werden, d.h. mit einer größeren Wahrscheinlichkeit ausgewählt werden, eine Gewichtung verliehen, so dass im Zweifelsfalle das Element mit der höheren Gewichtung ausgewählt wird. Diese Gewichtung kann als Faktor ausgebildet sein, so dass der Abstand mit diesem Faktor multipliziert wird, um den gewichteten Abstand zu erhalten. In einer alternativen Ausführungsform kann die Gewichtung dynamisch auf der Basis eines Berührungsmusters erfolgen. So ist zum Beispiel bei einem Automaten, der eine PIN Eingabe mit vier Ziffern erfordert, in der Regel nach der Eingabe der vier Ziffer als nächstes Steuerelement die Bestätigung zu erwarten. Andere Beispiele sind denkbar. So ist bei der PIN Eingabe zu erwarten, dass die Pins auf der PIN Tastatur auszuwählen sind, solange nicht die maximale Anzahl von Ziffern eingegeben wurde. Andere Tasten, die im Randbereich liegen, werden weniger wahrscheinlich ausgewählt. Für diesen Anwendungsbereich ist es nicht nur notwendig die Koordinaten der Steuerelemente zu kennen, sondern auch deren logischen Zusammenhang. Dieser logische Zusammenhang kann als Schrittfolge abgespeichert und berücksichtigt werden, wenn eine bestimmte Kombination von Steuerungselementen dargestellt wird. Weitere alternative Konstellationen sind denkbar, bei denen Gewichtungen von aktuellen Darstellungen der Steuerelemente abhängen.

In einer möglichen Ausführungsform ist das Verfahren in einem Treiber des Betriebssystem für die Touch-Einheit implementiert, wobei der Treiber regelmäßig oder ereignisgesteuert vom Betriebssystem Informationen über die Koordinaten der Steuerungselemente erhält. Der Treiber setzt in der Regel auf eine Treiberschicht auf, die für Eingabegeräte, wie Mäuse oder Tastaturen vom Betriebssystem vorgegeben ist. Sollte zum Beispiel die Eingabeeinheit über eine USB Schnittstelle angeschlossen sein, so wird ein entsprechender Treiber geladen. Dieser Treiber kann nun die Koordinaten abfangen, es bedarf jedoch noch der Informationen über die Anordnung der Steuerungselemente auf dem Bildschirm. Diese Informationen kann der Treiber sich in dem Moment besorgen, wenn eine Toucheingabe vorliegt oder er holte sie sich regelmäßig in Intervallen, oder bei einer geringen Auslastung des Systems, um diese in einem Speicher vorzuhalten, damit ein schneller Zugriff ermöglicht wird. Beim Windows Betriebssystem gibt es in der Regel Schnittstellen, wie API, die einen Zugriff auf diese Informationen ermöglichen. Somit kann der Treiber über diese Schnittstelle die Information der Koordinaten der Steuerungselemente erlangen und sie gegebenenfalls anhand ihrer Position, oder ihrer Kennung mit Gewichtungen belegen, falls dies gewünscht ist. In einer alternativen Ausgestaltungsform, können diese Informationen jedoch auch vom Treiber der Anzeige bzw. Displayeinheit erlangt werden. Dieser Treiber bekommt in der Regel nur Informationen über die Position und Art der Steuerungselemente und berechnet dann selbstständig deren Position und Darstellung als pixelorientierte Darstellung mit Hilfe des Grafikprozessors der Grafikkarte. Der Grafikprozessor ist in der Regel abgestimmt auf die Displayeinheit, über die in der Regel die berührungsempfindliche Einheit gelagert ist. Der Treiber, der diese Operation durchführt, kann ebenfalls eine Schnittstelle bereitstellen, über die ein Zugriff auf die Koordinaten der Steuerungselemente und deren Gewichtung möglich ist. Alternativ kann dieser Treiber auch die Informationen in einem Speicherbereich schreiben, der einen konkurrierenden Zugriff ermöglicht.

In einer alternativen Ausführungsform wird die Überprüfung und Neuberechnung der Berührungspunkte durch eine separate Einheit vorgenommen, die zwischengeschaltet ist zwischen dem System, auf dem das Betriebssystem läuft, und der Einheit, die die Berührungen detektiert. Die zwischengeschaltete Einheit kann sich dabei sowohl räumlich auf der Anzeigeeinheit befinden, als auch angesteckt sein an das System, auf dem das Betriebssystem läuft. In einer bevorzugten Form ist diese Einheit in die Anzeigeeinheit integriert und erhält die Daten über die Position der Steuerungselemente über einen gemeinsamen Speicher, der zum Beispiel von dem Treiber der Grafikeinheit angesprochen wird. Der Treiber der Grafikeinheit schreibt die Informationen in den gemeinsamen Speicher, der zum Beispiel als Erweiterung des Videokartenspeichers ausgebildet sein kann, und die Einheit holt sich regelmäßig oder basierend auf Ereignissen wichtige Daten aus diesem Speicher. Die Erweiterung des Videokartenspeichers umfasst somit keine pixelbezogenen Daten, sondern lediglich Koordinaten der Steuerungselemente. Somit bedarf es lediglich einer geringen Anpassung der Treiber auf Seiten des Betriebssystems. Im Einzelfall kann sogar die Hardware der Grafikkarte diese Operationen übernehmen, so dass keinerlei Änderung am Treibermodell notwendige sind, was eine Integration in eine Vielzahl von Plattformen erlaubt.

Ein weiterer Teil der Erfindung ist ein Computer basiertes System, das mit einem Touch-Bildschirm zur Verbesserung der Genauigkeit von Touch-Eingaben verbunden ist, mit einem Betriebssystem, das auf dem System läuft, das über Steuerelement, die auf dem Touch-Bildschirm dargestellt werden steuerbar ist, wobei durch Berühren des Touch-Bildschirms Signale mit Berührungskoordinaten an das Betriebssystem übertragbar sind, um durch das Betriebssystem zu überprüfen, ob der Bildschirm im Bereich der Steuerelemente berührt wurde, um entsprechend eine Funktion durch das Betriebssystem auszulösen. Dieses System ist gekennzeichnet durch die Komponenten:
- Verarbeitungseinheit eingerichtet und ausgebildet zum Bereitstellen von Koordinaten von Steuerelementen, die auf dem Touch-Bildschirm dargestellt werden;
- einer Verarbeitungseinheit zum Abfangen der Signale mit den Berührungskoordinaten bevor diese an das Betriebssystem weitergegeben werden. Hierbei erfolgt ein Zugreifen auf die Koordinaten der Steuerelemente des Betriebssystems, und ein Überprüfen, ob die Berührungskoordinaten innerhalb eines Steuerelements liegen;

falls die Berührungskoordinaten innerhalb eines Steuerelements liegen, erfolgt ein Weiterleiten der Berührungskoordinaten an das Betriebssystem;
falls die Berührungskoordinaten nicht innerhalb irgendeines der Steuerelemente liegen, so erfolgt eine Veränderung der Berührungskoordinaten, so dass diese innerhalb des räumlich nächstliegenden Steuerungselements liegen, um dann veränderte Berührungskoordinaten an das Betriebssystem weiterzuleiten.

Diese Erfindung kann mit allen bekannten Touch-Technologien, wie u.a. Resistive-Touch, SurfaceCapacitive- Touch, Projected-Capacitive-Touch, Imarot-Touch, Surface Accustic Wave Touch, Acoustic Puls Recognition und anderen Verfahren eingesetzt werden. Ribbon-Touch bringt für alle Verfahren eine signifikante Verbesserung der Bedienung.

Der Einsatz von RibbonTouch ist nicht auf bestimmte Produktgruppen beschränkt. Ein Einsatz in den Touchscreens von POS-Systemen, Geldausgabeautomaten, Kiosken, Spielkonsolen, Notebooks, Touchpads, Navigationsgeräten, Smartphones, Consumer- und Haushaltselektronikgeräten, Fahrzeugen und anderen ist möglich

### Figuren Beschreibung:

Die folgenden Figuren und die Beschreibungen zeigen mögliche Ausführungsformen, und dienen zur Verdeutlichung der Erfindung. Eine Beschränkung auf die dargestellte Ausführungsform ist jedoch nicht beabsichtigt. Der Schutzumfang soll allein durch die Ansprüche bestimmt werden und nicht durch die Ausführungsform.
Fig. 1 zeigt die Problematik des Berühren am Rande;
Figur 2 zeigt die Problematik der Toleranz;
Figur 3 zeigt ein De-Kalibrierungsproblem;
Figur 4 zeigt ein Flussdiagram des Ablaufs der vorliegenden Erfindung
Figur 5 zeigt ein Beispiel bei dem eine Berührung vorliegt, bei dem unterschiedliche Alternativen eines Steuerungselementes zur Verfügung stehen, die auszuwählen sind.

### Beschreibung der Ausführungsform:

Oftmals ist es schwierig bis unmöglich auf einem Touchbildschirm einen Touch dort auszulösen, wo es gewünscht ist. Verschiedene Gründe führen dazu.

### a) Randbereichsproblem

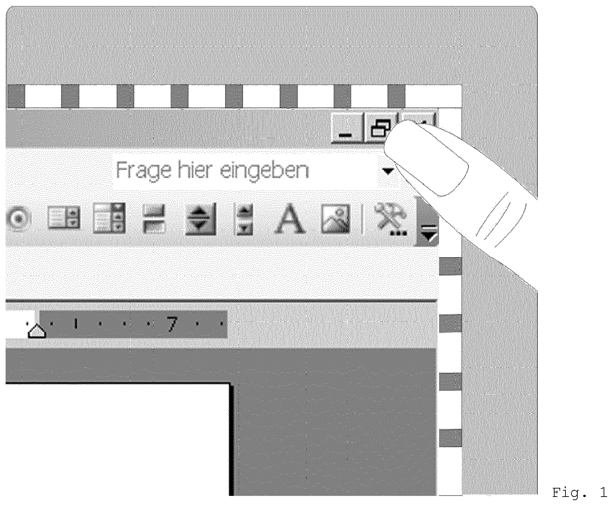

Kontrollelemente an den Rändern und Ecken lassen sich oft nicht auslösen, da der Finger mit einer Breite von ca. 14 mm und seiner Auflage in der Mitte nicht dichter als ca. 7 mm am Rahmen auslösen kann. Fig. 1 zeigt eines solches Randproblem. Das Kreuz zum Schließen eines Fensters liegt sehr weit oben in der Ecke eines Bildschirmes, so dass es für einen Finger, der in der Regel eine runde Berührungsfläche aufweist nur sehr schwer möglich ist, in diese Ecke hineinzuragen.

Bei der sehr weit verbreiteten kapazitiven Touch-Technologie ist es nicht möglich, statt mit dem Finger, auf einen spitzen Gegenstand - wie einen Kugelschreiber - zum Berühren auszuweichen, da ein Touch mit Gegenständen von dieser Technologie nicht erkannt wird.

### b) Auflösungs- und Toleranzproblem

Die Auflösung aller Touchtechnologien ist wesentlich gröber als die Bildauflösung. Typisch sind Touchgenauigkeiten von 3 - 5 mm. Im Rahmen von Kostenreduzierungen wird man aber auch mit Toleranzen von bis 7mm konfrontiert.

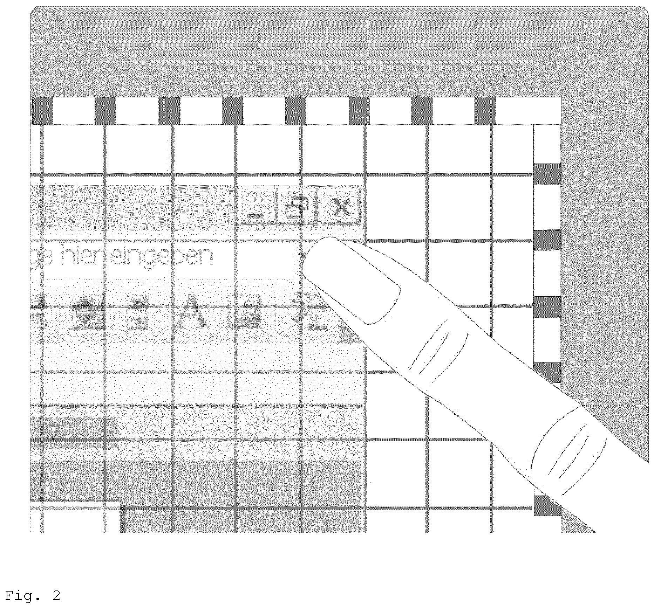

Fig. 2 zeigt eine Problematik der Toleranz. Je größer die Toleranz ist, je schwieriger wird es, das jeweils gewünschte Steuerelement zu treffen. Feld-Erfahrungen haben gezeigt, dass Toleranzen von mehr als 5 mm von den Bedienern nicht akzeptiert werden, da die Bedienung recht schwierig ist.

### c) De-Kalibrierungsproblem

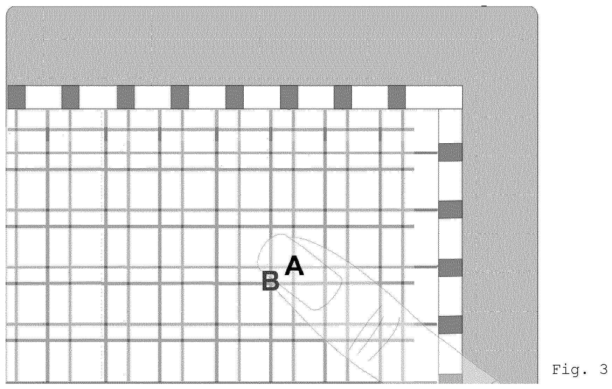

Einige Touch-Technologien wie z.B. Resistive-Touch und Capacitive-Touch können sich über die Zeit oder bei wechselnden klimatischen Umgebungen in der Erkennungsgenauigkeit verändern und z.B. einen Offset zwischen tatsächlich berührter Position und erkannter Position bekommen. Man spricht dann von einer De-Kalibrierung des Touch-Systems. Die Figur 3 zeigt eine entsprechende Anordnung von unterschiedlichen Punkten. Statt der angestrebten Position A wird die Berührung z.B. um den Offset durch die De-Kalibrierung an der Position B erkannt. So wird die gewünschte Schaltfläche unter Umständen verfehlt und keine oder sogar eine falsche Funktion ausgelöst.

Oftmals ist es, auf Grund einer oder mehrerer der oben beschriebenen Limitationen, schwierig das gewünschte Kontrollelement per Touch auszulösen. Die Erfindung löst das Problem und hilft dem Anwender das gewünschte Kontrollelement auszulösen.

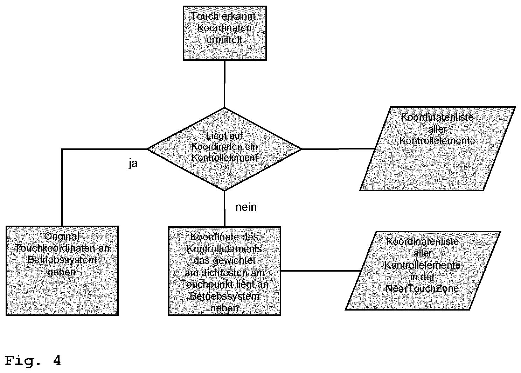

Die vom Touchcontroller kommenden Touchkoordinaten werden zunächst abgefangen und nicht an das Betriebssystem (Windows, Linux, MacOS, etc.) weiter gegeben (siehe Figur 4). Es werden alle Steuerelemente in der NearTouchZone mit Koordinaten gelistet und mit den Koordinaten des ausgelösten Touch verglichen. Wenn der Touch kein Steuerelement getroffen hat, wird ausgewertet welches Steuerelement in der Nähe des Touchpunktes liegt. Dieses Verfahren kann gewichtet und ungewichtet erfolgen. Dass heißt die Steuerelemente können eine gleiche Behandlung oder eine prioritätsabhängige Behandlung erfahren. Wie ein Gummiband (daher RibbonTouch) zieht der Algorithmus den Touch vom erkannten Punkt zum tatsächlichen Zielpunkt. Diese neuen Koordinaten werden dann an das Betriebssystem übergeben und das System registriert den Touch an der tatsächlich vom Bediener gewünschten Position.

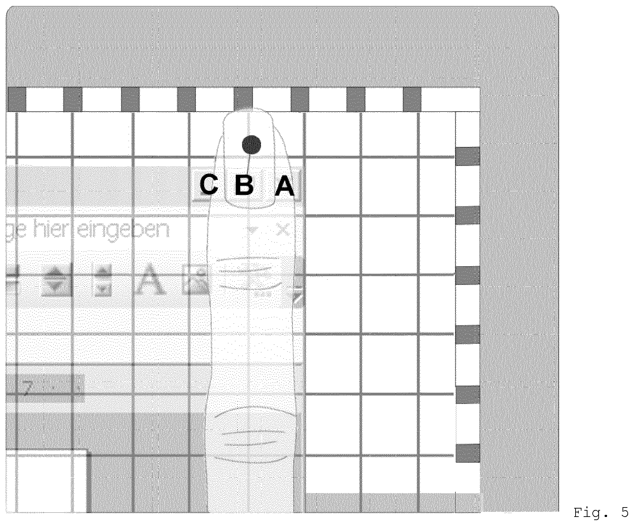

Im folgenden Beispiel in Figur 5 wird der Touch an einer Position erkannt, an der sich kein Steuerelement befindet.

Es wird nun geprüft, welche Steuerelemente sich in dem Bereich um den Touchpunkt, der NearTouchZone befinden. Die Kontrollelemente A, B und C werden in der NearTouchZone erkannt. Von diesen drei Kontrollelementen wird das Kontrollelement B als das dem erkannten Touch nächstes detektiert. Es werden die Koordinaten des Kontrollelementes B als Touchkoordinaten an das Betriebssystem weiter gegeben. Somit wird trotz einer Touchabweichung die gewünschte Bedienung des Touchsystems erreicht.

Der Einsatz der Erfindung ist somit unabhängig vom Betriebssystem und kann als Firmware, Software oder Hardware implementiert werden.

## Patentansprüche

1. Verfahren zur Verbesserung der Genauigkeit von Touch-Eingaben auf einem Touch-Bildschirm, der mit einem Computer verbunden ist, auf dem ein Betriebssystem läuft, das über Steuerelemente, die auf dem Touch-Bildschirm dargestellt werden, steuerbar ist, wobei durch Berühren des Touch-Bildschirms Signale mit Berührungskoordinaten an das Betriebssystem übertragbar sind, um durch das Betriebssystem überprüft zu werden, ob der Bildschirm im Bereich der Steuerelemente berührt wurde, um entsprechend eine Funktion auszuführen, **gekennzeichnet durch** die Schritte:
- Abfangen der Signale mit den Berührungskoordinaten bevor diese an das Betriebssystem weitergegeben werden;
- Zugreifen auf die Koordinaten der Steuerelemente des Betriebssystems, und Überprüfen, ob die Berührungskoordinaten innerhalb eines Steuerelements liegen;
- falls die Berührungskoordinaten innerhalb eines Steuerelements liegen, Weiterleiten der Berührungskoordinaten an das Betriebssystem;
- falls die Berührungskoordinaten nicht innerhalb irgendeines der Steuerungselemente liegen, Verändern der Berührungskoordinaten, so dass diese innerhalb des räumlich nächstliegenden Steuerungselements liegen, und Weiterleiten der veränderten Berührungskoordinaten an das Betriebssystem.

2. Das Verfahren nach dem vorhergehenden Anspruch, wobei die Berührungskoordinaten so verändert werden, dass das räumlich nächstliegende Steuerungselement ausgewählt wird, indem eine Abstandsberechnung durchgeführt wird.

3. Das Verfahren nach dem vorhergehenden Anspruch, wobei die Steuerungselemente gewichtet sind, und wobei die Gewichtung in die Abstandsberechnung einfließt.

4. Das Verfahren nach dem vorhergehenden Anspruch, wobei die Gewichtung auf der Basis eines Berührungsmusters erfolgt, oder auf der Basis von Wahrscheinlichkeiten.

5. Das Verfahren nach einem oder mehreren der vorhergehenden Ansprüche, wobei das Verfahren in einem Treiber des Betriebssystems für die Touch-Einheit implementiert ist, wobei der Treiber regelmäßig oder ereignisgesteuert vom Betriebssystem Informationen über die Koordinaten der Steuerungselemente erhält.

6. Das Verfahren nach einem oder mehreren der vorhergehenden Ansprüche, **gekennzeichnet durch** die Implementierung auf einer Bearbeitungseinheit des Touch-Screens, wobei die Bearbeitungseinheit regelmäßig oder ereignisgesteuert vom Betriebssystem Informationen über die Koordinaten der Steuerungselemente erhält oder abfragt.

7. Das Verfahren nach dem vorhergehenden Anspruch, wobei ein Prozess, der auf dem Betriebssystem läuft, regelmäßig oder ereignisgesteuert in einen Speicherbereich des Touch-Screens die Koordinaten der Steuerelemente schreibt.

8. Das Verfahren nach einem oder mehreren der vorhergehenden Ansprüche, wobei der Touch-Screen auf einer der folgenden Technologien basiert: Resistive-Touch, Surface-Capacitive-Touch, Projected-Capacitive-Touch, Infrarot-Touch, Surface-Acoustic-Wave-Touch, Acoustic-Pulse-Recognition.

9. Das Verfahren nach einem oder mehreren der vorhergehenden Ansprüche, wobei das System eines der folgenden ist: POS-System, Geldautomat, Kiosk, Spielkonsole, Notebook, Touchpad, Navigationsgerät, Smartphone, Consumer- und Haushaltselektronikgerät, Fahrzeug.

10. Computer basiertes System verbunden mit einem Touch-Bildschirm zur Verbesserung der Genauigkeit von Touch-Eingaben, mit einem Betriebssystem, das auf dem System läuft, das über Steuerelemente, die auf dem Touch-Bildschirm dargestellt werden, steuerbar ist, wobei durch Berühren des Touch-Bildschirms Signale mit Berührungskoordinaten an das Betriebssystem übertragbar sind, um durch das Betriebssystem überprüft zu werden, ob der Bildschirm im Bereich der Steuerelemente berührt wurde, um entsprechend eine Funktion auszulösen, **gekennzeichnet durch** die Komponenten:
- Verarbeitungseinheit eingerichtet und ausgebildet zum Bereitstellen von Koordinaten von Steuerelementen, die auf dem Touch-Bildschirm dargestellt werden;
- Verarbeitungseinheit zum
Abfangen der Signale mit den Berührungskoordinaten bevor diese an das Betriebssystem weitergegeben werden, Zugreifen auf die Koordinaten der Steuerelemente des Betriebssystems, und Überprüfen, ob die Berührungskoordinaten innerhalb eines Steuerelements liegen;
falls die Berührungskoordinaten innerhalb eines Steuerelements liegen, Weiterleiten der Berührungskoordinaten an das Betriebssystem;
falls die Berührungskoordinaten nicht innerhalb irgendeines der Steuerungselemente liegen, Verändern der Berührungskoordinaten, so dass diese innerhalb des räumlich nächstliegenden Steuerungselements liegen, und Weiterleiten der veränderten Berührungskoordinaten an das Betriebssystem.

11. Das computerbasierte System nach dem vorhergehenden Anspruch, wobei die Verarbeitungseinheit ausgebildet ist, um die Berührungskoordinaten so zu verändern, dass das räumlich nächstliegende Steuerungselement ausgewählt wird, indem eine Abstandberechnung durchgeführt wird.

12. Das computerbasierte System nach dem vorhergehenden Anspruch, wobei die Steuerungselemente gewichtet sind, und wobei die Gewichtung in die Abstandsberechnung einfließt.

13. Das computerbasierte System nach dem vorhergehenden Anspruch, wobei die Gewichtung auf der Basis eines Berührungsmusters erfolgt, oder auf der Basis von Wahrscheinlichkeiten.

14. Das computerbasierte System nach einem oder mehreren der vorhergehenden Systemansprüche, wobei die Verarbeitungseinheit zum
Abfangen der Signale in einem Treiber des Betriebssystem für die Touch-Einheit implementiert ist, wobei der Treiber regelmäßig oder ereignisgesteuert Informationen über die Koordinaten der Steuerungselemente erhält.

15. Das computerbasierte System nach einem oder mehreren der vorhergehenden Systemansprüche, **dadurch gekennzeichnet, dass** die Verarbeitungseinheit zum Abfangen der Signale auf einer Verarbeitungseinheit im Touch-Screen implementiert ist, wobei die Bearbeitungseinheit regelmäßig oder ereignisgesteuert Informationen über die Koordinaten der Steuerungselemente erhält.

16. Das computerbasierte System nach dem vorhergehenden Anspruch, wobei die Verarbeitungseinheit zum Bereitstellen von Koordinaten ein Prozess ist, der auf dem Betriebssystem läuft, der regelmäßig oder ereignisgesteuert in einen Speicherbereich des Touch-Screens die Koordinaten der Steuerelemente schreibt.

17. Das computerbasierte System nach einem oder mehreren der vorhergehenden Ansprüche, wobei der Touch-Screen auf einer der folgenden Technologien basiert: Resistive-Touch, Surface-Capacitive-Touch, Projected-Capacitive-Touch, Infrarot-Touch, Surface-Acoustic-Wave-Touch, Acoustic-Pulse-Recognition.

18. Das computerbasierte System nach einem oder mehreren der vorhergehenden Ansprüche, wobei das System eines der folgenden ist: POS-System, Geldautomat, Kiosk, Spielkonsole, Notebook, Touchpad, Navigationsgerät, Smartphone, Consumer- und Haushaltselektronikgerät, Fahrzeug.

## Claims

1. Method for improving the accuracy of touch inputs on a touchscreen connected to a computer on which runs an operating system that is controllable using control elements presented on the touchscreen, wherein touching the touchscreen renders signals containing touch coordinates transmittable to the operating system in order for the operating system to check them for whether the screen has been touched in the region of the control elements, so as accordingly to perform a function, **characterized by** the steps:
- intercepting the signals containing the touch coordinates before they are passed on to the operating system;
- accessing the coordinates of the control elements of the operating system, and checking whether the touch coordinates are within a control element;
- if the touch coordinates are within a control element, forwarding the touch coordinates to the operating system;
- if the touch coordinates are not within any of the control elements, altering the touch coordinates, so that they are within the spatially closest control element, and forwarding the altered touch coordinates to the operating system.

2. Method according to the preceding claim, wherein the touch coordinates are altered such that the spatially closest control element is selected by virtue of a distance calculation being performed.

3. Method according to the preceding claim, wherein the control elements are weighted, and wherein the weighting is included in the distance calculation.

4. Method according to the preceding claim, wherein the weighting is provided on the basis of a touch pattern, or on the basis of probabilities.

5. Method according to one or more of the preceding claims, wherein the method is implemented in a driver of the operating system for the touch unit, wherein the driver obtains information about the coordinates of the control elements from the operating system on a regular or event-controlled basis.

6. Method according to one or more of the preceding claims, **characterized by** the implementation on a processing unit of the touchscreen, wherein the processing unit obtains or requests information about the coordinates of the control elements from the operating system on a regular or event-controlled basis.

7. Method according to the preceding claim, wherein a process running on the operating system writes the coordinates of the control elements to a memory area of the touchscreen on a regular or event-controlled basis.

8. Method according to one or more of the preceding claims, wherein the touchscreen is based on one of the following technologies: resistive touch, surface capacitive touch, projected capacitive touch, infrared touch, surface acoustic wave touch, acoustic pulse recognition.

9. Method according to one or more of the preceding claims, wherein the system is one of the following: POS system, automated teller machine, kiosk, games console, notebook, touchpad, navigation device, smartphone, consumer and household electronics appliance, vehicle.

10. Computer-based system connected to a touchscreen to improve the accuracy of touch inputs, having an operating system, which runs on the system, that is controllable using control elements presented on the touchscreen, wherein touching the touchscreen renders signals containing touch coordinates transmittable to the operating system in order for the operating system to check them for whether the screen has been touched in the region of the control elements, so as accordingly to trigger a function, **characterized by** the components:
- processing unit configured and designed to provide coordinates of control elements presented on the touchscreen;
- processing unit for intercepting the signals containing the touch coordinates before they are passed on to the operating system, accessing the coordinates of the control elements of the operating system, and checking whether the touch coordinates are within a control element;
if the touch coordinates are within a control element, forwarding the touch coordinates to the operating system;
if the touch coordinates are not within any of the control elements, altering the touch coordinates, so that they are within the spatially closest control element, and forwarding the altered touch coordinates to the operating system.

11. Computer-based system according to the preceding claim, wherein the processing unit is designed to alter the touch coordinates such that the spatially closest control element is selected by virtue of a distance calculation being performed.

12. Computer-based system according to the preceding claim, wherein the control elements are weighted, and wherein the weighting is included in the distance calculation.

13. Computer-based system according to the preceding claim, wherein the weighting is provided on the basis of a touch pattern, or on the basis of probabilities.

14. Computer-based system according to one or more of the preceding system claims, wherein the processing unit for intercepting the signals is implemented in a driver of the operating system for the touch unit, wherein the driver obtains information about the coordinates of the control elements on a regular or event-controlled basis.

15. Computer-based system according to one or more of the preceding system claims, **characterized in that** the processing unit for intercepting the signals is implemented on a processing unit in the touchscreen, wherein the processing unit obtains information about the coordinates of the control elements on a regular or event-controlled basis.

16. Computer-based system according to the preceding claim, wherein the processing unit for providing coordinates is a process running on the operating system that writes the coordinates of the control elements to a memory area of the touchscreen on a regular or event-controlled basis.

17. Computer-based system according to one or more of the preceding claims, wherein the touchscreen is based on one of the following technologies: resistive touch, surface capacitive touch, projected capacitive touch, infrared touch, surface acoustic wave touch, acoustic pulse recognition.

18. Computer-based system according to one or more of the preceding claims, wherein the system is one of the following: POS system, automated teller machine, kiosk, games console, notebook, touchpad, navigation device, smartphone, consumer and household electronics appliance, vehicle.

## Revendications

1. Procédé d'amélioration de la précision d'entrées tactiles sur un écran tactile relié à un ordinateur qui exécute un système d'exploitation qui peut être commandé par le biais d'éléments de commande affichés sur l'écran tactile, des signaux qui incluent des coordonnées de contact pouvant être transmis au système d'exploitation par contact de l'écran tactile afin que le système d'exploitation vérifie si l'écran a été contacté dans la zone des éléments de commande pour exécuter en conséquence une fonction, le procédé étant **caractérisé par** les étapes suivantes :
- récupérer les signaux qui comportent les coordonnées de contact avant qu'ils ne soient transmis au système d'exploitation ;
- accéder aux coordonnées des éléments de commande du système d'exploitation et vérifier si les coordonnées de contact sont incluses dans un élément de commande ;
- si les coordonnées de contact sont incluses dans un élément de commande, transmettre les coordonnées de contact au système d'exploitation ;
- si les coordonnées de contact ne sont incluses dans aucun des éléments de commande, modifier les coordonnées de contact de sorte qu'elles soient incluses dans l'élément de commande le plus proche et transmettre les coordonnées de contact modifiées au système d'exploitation.

2. Procédé selon la revendication précédente, les coordonnées de contact étant modifiées de façon à sélectionner l'élément de commande le plus proche dans lequel un calcul de distance est effectué.

3. Procédé selon la revendication précédente, les éléments de commande étant pondérés, et la pondération étant incluse dans le calcul de distance.

4. Procédé selon la revendication précédente, la pondération étant effectuée sur la base d'un modèle de contact ou sur la base de probabilités.

5. Procédé selon l'une au moins des revendications précédentes, le procédé étant mis en œuvre dans un pilote du système d'exploitation pour l'unité tactile, le pilote recevant de manière régulière ou événementielle du système d'exploitation des informations sur les coordonnées des éléments de commande.

6. Procédé selon l'une au moins des revendications précédentes, **caractérisé en ce qu'**il est mis en œuvre sur une unité de traitement de l'écran tactile, l'unité de traitement recevant du système d'exploitation, ou consultant celui-ci, de manière régulière ou événementielle, des informations sur les coordonnées des éléments de commande.

7. Procédé selon la revendication précédente, un processus exécuté sur le système d'exploitation écrivant de manière régulière ou événementielle les coordonnées des éléments de commande dans une zone de mémoire de l'écran tactile.

8. Procédé selon l'une au moins des revendications précédentes,
l'écran tactile étant basé sur l'une des technologies suivantes : Resistive-Touch, Surface-Capacitive-Touch, Projected-Capacitive-Touch, Infrared-Touch, Surface-Acoustic-Wave-Touch, Acoustic-Pulse-Recognition.

9. Procédé selon l'une au moins des revendications précédentes, le système étant l'un des systèmes suivants : système POS, distributeur de billets, kiosque, console de jeux, ordinateur portable, pavé tactile, appareil de navigation, smartphone, appareil électronique grand public et ménager, véhicule.

10. Système informatisé relié à un écran tactile pour améliorer la précision d'entrées tactiles, ledit système comprenant un système d'exploitation qui est exécuté sur le système qui peut être commandé par le biais d'éléments de commande affichés sur l'écran tactile, des signaux qui incluent des coordonnées de contact pouvant être transmis au système d'exploitation par contact de l'écran tactile afin que le système d'exploitation vérifie si l'écran a été contacté dans la zone des éléments de commande pour déclencher en conséquence une fonction, ledit système étant **caractérisé par** les composants suivants :
- une unité de traitement adaptée et conçue pour produire les coordonnées d'éléments de commande affichés sur l'écran tactile ;
- une unité de traitement destiné à récupérer les signaux qui incluent les coordonnées de contact avant qu'ils ne soient transmis au système d'exploitation, accéder aux coordonnées des éléments de commande du système d'exploitation et vérifier si les coordonnées de contact sont incluses dans un élément de commande ; si les coordonnées de contact sont incluses dans un élément de commande, transmettre les coordonnées de contact au système d'exploitation ;
si les coordonnées de contact ne sont incluses dans aucun des éléments de commande, modifier les coordonnées de contact pour qu'elles soient incluses dans l'élément de commande le plus proche et transmettre les coordonnées de contact modifiées au système d'exploitation.

11. Système informatisé selon la revendication précédente, l'unité de traitement étant conçue pour modifier les coordonnées de contact de manière à sélectionner l'élément de commande le plus proche dans lequel un calcul de distance est effectué.

12. Système informatisé selon la revendication précédente, les éléments de commande étant pondérés, et la pondération étant incluse dans le calcul de distance.

13. Système informatisé selon la revendication précédente, la pondération étant basée sur un modèle de contact ou sur des probabilités.

14. Système informatisé selon l'une au moins des revendications de système précédentes, l'unité de traitement destinée à récupérer les signaux étant implémentée dans un pilote du système d'exploitation de l'unité tactile, le pilote recevant de manière régulière ou événementielle des informations sur les coordonnées des éléments de commande.

15. Système informatisé selon l'une au moins des revendications de système précédentes, **caractérisé en ce que** l'unité de traitement destinée à récupérer les signaux est implémentée sur une unité de traitement située dans l'écran tactile, l'unité de traitement recevant de manière régulière ou événementielle des informations sur les coordonnées des éléments de commande.

16. Système informatisé selon la revendication précédente, l'unité de traitement destinée à produire des coordonnées étant un processus qui est exécuté sur le système d'exploitation et qui écrit de manière régulière ou événementielle les coordonnées des éléments de commande dans une zone de mémoire de l'écran tactile.

17. Système informatisé selon l'une au moins des revendications précédentes,
l'écran tactile étant basé sur l'une des technologies suivantes : Resistive-Touch, Surface-Capacitive-Touch, Projected-Capacitive-Touch, Infrared-Touch, Surface-Acoustic-Wave-Touch, Acoustic-Pulse-Recognition.

18. Système informatisé selon l'une au moins des revendications précédentes, le système étant l'un des systèmes suivants : système POS, distributeur de billets, kiosque, console de jeux, ordinateur portable, pavé tactile, appareil de navigation, smartphone, appareil électronique grand public et ménager, véhicule.
